# EUROPEAN PATENT SPECIFICATION

(11) **EP 3 483 519 B1**
(45) Date of publication and mention of the grant of the patent: **01.09.2021**
(21) Application number: 18206349.5
(22) Date of filing: 14.11.2018
(51) Int. Cl.: F24H 8/00, F16T 1/22, F16K 31/18, F16K 17/02

(54) **DRAINING VALVE FOR DRAINING THE CONDENSATE OF A CONDENSATION BOILER AND CONDENSATION BOILER COMPRISING SAID DRAINING VALVE**
ABLASSVENTIL ZUM ABLASSEN VON KONDENSAT EINES KONDENSATIONSKESSELS UND KONDENSATIONSKESSEL MIT BESAGTEM ABLASSVENTIL
SOUPAPE DE DRAINAGE DE CONDENSAT D'UNE CHAUDIÈRE À CONDENSATION ET CHAUDIÈRE À CONDENSATION COMPRENANT LADITE SOUPAPE DE DRAINAGE

(30) Priority: 14.11.2017 IT 201700129893
(43) Date of publication of application: 15.05.2019
(73) Proprietor: Riello S.p.A., 37045 Legnago (IT)
(72) Inventor: CASIRAGHI, Stefano, 23875 OSNAGO (LC) (IT)
(74) Representative: Martini, Gabriele

(56) References cited:
- EP-A1- 2 562 465
- EP-A1- 2 910 867
- DE-A1- 4 323 048
- US-B1- 9 777 957

## Description

### CROSS-REFERENCE TO RELATED APPLICATIONS

This patent application claims priority from Italian patent application no. 102017000129893 filed on November 14, 2017.

### Technical field

The present invention relates to a draining valve for draining the condensate of a condensation boiler. The present invention also relates to a condensation boiler comprising said draining valve.

### State of the art

As known, condensation boilers comprise a combustion chamber where heat is exchanged between water to be heated circulating in coils and hot smoke produced by combustion of air and fuel gas. Due to heat migration from hot smoke to water, the water vapour in the smoke is transformed into condensate. Such condensate settles by gravity in the lower portion of the combustion chamber, also called condensate collection well, and from this position must be evacuated. In order to evacuate the condensate collected in said well, a discharge duct is provided, which connects the combustion chamber to a drain. Generally, this condensate is discharged into the storm sewage system. The combustion chamber is also connected to a smoke exhaust pipe possibly equipped with a fan.

To prevent the combustion smoke from evacuating from the combustion chamber through the condensate discharge duct, the discharge duct may comprise a siphon. However, this solution may prove insufficient in some particular operating conditions. In fact, the siphon is ineffective in the absence of condensate and this event occurs when the boiler is ignited for the first time or whenever it is operated after long periods of inactivity.

To solve this problem, the arrangement of a valve, known as a draining valve, along the discharge duct, even without the aforementioned siphon, is well known, the draining valve being configured to allow liquid flow and prevent gas flow. In particular, this draining valve comprises a body valve having an axis coinciding with the axis defined by gravity and equipped with a condensate feeding channel and a condensate draining channel. These feeding and draining channels are aligned along the axis of the valve, and a float is provided therebetween. This float is configured so that, in the absence of condensate, the draining channel is closed, thus avoiding the presence of an open channel that can be travelled by smoke, and that in the presence of condensate, it rises, thereby opening a draining channel and allowing the condensate to continue along the discharge duct downstream of the valve.

However, the provision of said float-type draining valve may lead to particular operating conditions which are potentially dangerous to the condensation boiler. In fact, in the case of exceptional overpressure forces acting on the float and deriving from a particularly abundant feeding of condensate into the body valve housing the float, a condition could occur in which, even in the presence of condensate, the float fails to rise and open the draining channel. In this configuration, the condensate could climb along the feeding duct of the valve and then also along the discharge duct upstream of the valve until it reaches the combustion chamber, compromising its functionality.

EP2910867 discloses a condensate separator with a condensate container housing a float, wherein the float can move between an upper and a lower position.

DE4323048 refers to a steam trap having an outlet opening and comprising a closing organ and a float, wherein the closing organ closes the outlet opening with the float in a low position and allows it to open in a high position of the float.

US9777957 discloses a condensate trap comprising a float and a housing configured to receive condensate from a condensate-producing source, the condensate trap is configured to allow condensate to exit from the housing to a condensate drain.

### Description of the invention

Starting from this prior art, it is an object of the present invention to provide an alternative draining valve for draining the condensate that forms in the combustion chamber in a condensation boiler.

In particular, it is an object of the present invention to provide a draining valve, which allows the aforementioned drawbacks of the prior art to be overcome in a simple and inexpensive manner, both from the functional and the constructional point of view.

More in particular, the present invention relates to a draining valve configured to prevent the passage of smoke along the discharge duct in the absence of condensate, as well as to allow condensate drainage even when the force acting on the float during the condensate feeding is greater than the floating force.

In accordance with the present invention, there is provided a draining valve for draining the condensate of a condensation boiler. In general, a boiler adapted to receive the draining valve of the present invention is a condensation boiler comprising:
- a combustion chamber where heat is exchanged between hot smoke produced by combustion and water to be heated flowing inside the heat exchanger between an inlet and an outlet;
- a burner configured for generating the above-mentioned hot smoke from combustion of a mixture of air and fuel, inside the combustion chamber;
- a condensate discharge duct for discharging the condensate resulting from the cooling of the hot smoke and connected to a lower portion of the combustion chamber;
- a hot smoke discharge duct.

Fans are preferably provided for drawing air for combustion and/or for forcing the hot smoke to evacuate into the hot smoke discharge duct. Preferably, the fuel for combustion is fuel gas.

In this configuration of the condensation boiler, the draining valve of the present invention, which will be described below, is arranged along the discharge duct, in order to identify an upstream discharge portion between the combustion chamber and the draining valve itself, or can be directly coupled to the discharge of the combustion chamber upstream of the entire discharge duct.

The draining valve of the present invention extends along an axis A, hereinafter valve axis A, which substantially coincides with the axis defined by the gravity force. The valve comprises a body valve provided with a condensate feeding inlet, directly at the output of the combustion chamber or connected to the upstream portion of the discharge duct, and a draining outlet. The condensate feeding inlet and draining outlet are arranged on opposite sides of the body valve, along the valve axis A. The body valve is preferably made in the form of two cup-shaped half-shells, joined at mutual fringed ends. The condensate feeding inlet and draining outlet can be in various forms, including simple holes in the body valve, as well as external tubular elements and/or tubular elements penetrating into the body valve and made in one piece with corresponding half-shells. Of course, these tubular portions are configured to sealingly couple with the remainder of the condensate discharge circuit.

The body valve houses a floating shutter substantially orthogonal to the valve axis A and comprising a first, or upper face, facing the feeding inlet, and a second, or lower face, facing the draining outlet. The floating shutter is configured to be selectively movable relative to the body valve along the valve axis A between:
- a first raised position in which the floating shutter is raised by the floating force generated by the condensate against the second face; in this position, a main draining channel is present and freely accessible to the condensate, substantially providing for bypass of the floating shutter; of course, this first position can be reached only in the event of condensation in the body valve (a necessary but not sufficient condition as will be apparent from the following); and
- a second lowered position in which the floating shutter is lowered in abutment against the draining outlet for closing the main draining channel; in this lowered position, the condensate still can reach the lower face of the floating shutter to start exerting the lifting/floating force that opens the draining outlet.

This second condition is created under two circumstances. The first condition occurs in the absence of condensate in the valve. In this case, no floating force is created, and due to gravity the floating shutter obstructs the draining outlet. The combustion smoke are thus prevented from penetrating along the discharge duct when the boiler is started, i.e. in the absence of condensation. The second condition in which the floating shutter is lowered and obstructs the draining outlet occurs when condensate enters the body valve through the inlet in such quantity as to create a force against the upper face greater than the floating force. In this condition, there is condensation but the main draining channel that bypasses the float is obstructed.

In order to allow condensate drainage in this condition too, according to the main aspect of the invention, the floating shutter is further configured to selectively provide a secondary draining channel when, in the second lowered position, a force higher than a predetermined value acts on the first, or upper face, which is preferably greater than the floating force pushing on the lower face. Of course, such a threshold value, which allows the secondary draining channel to be opened, is lower than the force that can be generated by the smoke, so as to prevent the undesired passage of said smoke.

Advantageously, in this way, in every occurrence of condensation, the latter can reach the draining outlet and continue along the discharge duct.

According to a preferred embodiment of the invention, the floating shutter comprises a toroidal or ring-shaped floating body with a through cavity centered on the valve axis A, and a check valve housed in the through cavity. In particular, this check valve is configured for selectively opening the secondary condensate draining channel along the axis A of the valve.

To prevent leakage, at least one seal or sealing ring is provided between the check valve and the through cavity of the toroidal float.

Preferably, the check valve comprises a fixed portion integral with the toroidal float and a movable portion, which is movable relative to the fixed portion along the axis A of the valve and faces the feeding inlet. This movable portion is movable between a raised position in which it closes the secondary draining channel and a lowered position in which it opens the secondary draining channel. A spring is provided between the fixed portion and the movable portion to force the closure of the check valve, until a predetermined force value acting on the movable portion at the upper face of the float is reached. In this configuration, the movable portion is not flush with the second face of the floating shutter but is in a lowered position.

Advantageously, in this way, an accumulation chamber is created, which, when filled by the condensate, enables the opening of the secondary draining channel independently of the position of the float. In fact, the second secondary draining channel could also open when the float is in the raised position, in the event of a sudden anomalous overpressure acting on the check valve.

Preferably, the draining outlet comprises a draining duct provided with a portion protruding inside the body valve. In this way, lateral condensate accumulation portions are created, which are capable of generating the buoyancy required to lift the float, which in fact rests on the edge of the draining duct at its inner edge.

In order to control the movement of the float in the body valve, a stop element, such as a radial shaft, and at least one guide, such as a vertical rib, are provided for stopping the raising of the floating shutter and guiding the movement of the floating shutter and keeping it centered with respect to the axis A of the valve, respectively.

### Description of one embodiment of the invention

Further features and advantages of the present invention will be apparent from the following description of a non-limiting embodiment thereof, with reference to the Figures of the accompanying drawings, wherein:
- Figure 1 is an exemplary schematic view of a condensation boiler equipped with a draining valve according to the present invention;
- Figures 2-4 show schematic sectional views of one embodiment of a draining valve according to the present invention, according to three different operating modes.

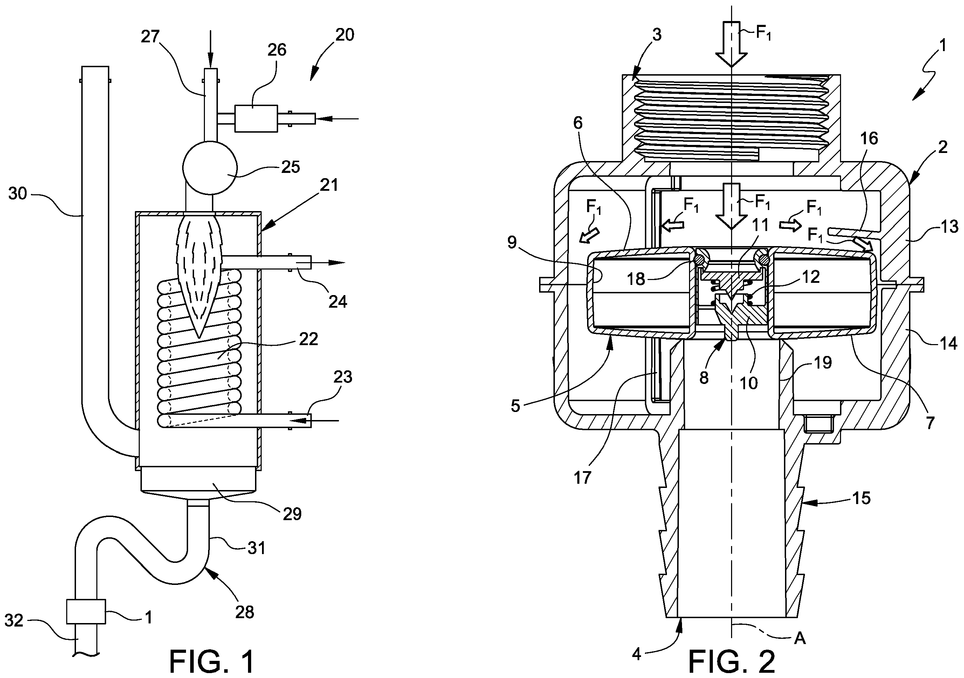

With reference to Figure 1, reference number 20 schematically shows a condensation boiler. This boiler comprises:
- a combustion chamber 21 where heat is exchanged between hot smoke produced by combustion and water to be heated flowing in coils 22 between an inlet 23 and an outlet 24;
- a burner 25 configured for generating hot smoke from combustion of air 26 and fuel 27 inside the combustion chamber 21;
- a condensate discharge duct 28 connected to a lower portion 29 of the combustion chamber 21; and
- a hot smoke discharge duct 30.

The aforesaid elements, as well as the operation of a condensation valve, are known per se and therefore will not be further described for simplicity.

In particular, the boiler 20 comprises a draining valve 1 arranged along the discharge duct 28, so as to divide it into an upstream portion 31 and a downstream portion 32.

With reference to Figures 2-4, reference number 1 schematically shows one embodiment of a draining valve according to the present invention.

With particular reference to Figure 2, the valve 1 comprises a body valve 2 having an axis A and formed by joining two cup-shaped half-shells 13/14. Each half-shell 13/14 comprises an opening aligned with the axis A, which respectively defines the inlet 3 for the condensate fed by the upstream portion 31 of the discharge duct 28, and the draining outlet 4 for the delivery of the condensate to the downstream portion 32 of the discharge duct 28. In the example shown, the inlet 3 comprises a tubular portion protruding outside the body valve 2 and provided with an internal thread. Instead, the outlet 4 is made in the form of a tubular element 15, with portions protruding both internally 19 and externally to the body valve 2. The body valve houses a floating shutter 5 comprising a floating body 9, which is toroidal in shape and centered on the axis A, and a check valve 8 having an axis centered on the axis A and integrally coupled, by means of a seal 18, to the inner walls of the cavity of the floating body 9. In the configuration of Figure 2, the floating body 9 is resting by gravity on the edge of the inner portion 19 of the tubular element 15 and there is no feeding of condensate into the body valve. The arrows F1 shown in Figure 2 represent the smoke attempting to pass the valve 1. These smoke can penetrate into the body valve 2, passing through the inlet 4, and laterally bypass the float 5 until they reach the lower face 7 of the same, which is in abutment against the edge of the inner portion 19 of the tubular element 15. However, the load generated by the smoke both on the lower face 7 and on the upper face 6 can neither lift the float 5 so as to open a gap between the floating body 9 and the edge of the inner portion 19 of the tubular element 15, nor open the check valve 8 due to the effect of the spring 12, which keeps the movable portion 11 of the valve 8 in a position distal to the corresponding fixed portion 10.

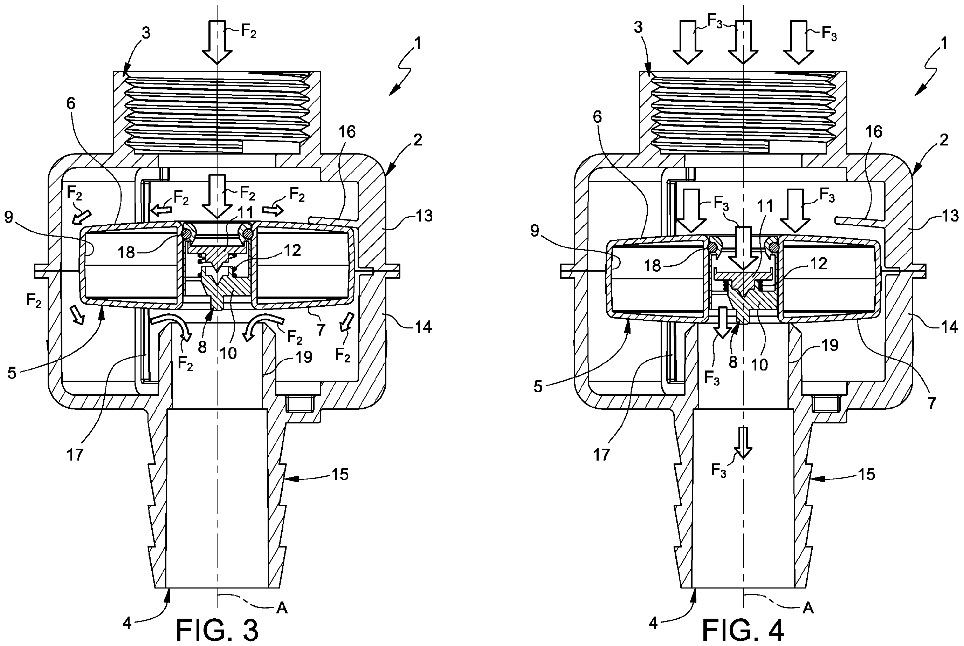

With reference to Figure 3, the arrows F2 indicate a condensate flow penetrating into the body valve 2. In particular, the extent of this flow can be defined as non-anomalous in the sense that by reaching the lower face 7 of the float 5 it generates a lifting/floating force such as to create a gap between the floating body 9 and the edge of the inner portion 19 of the tubular element 15. In this condition, therefore, the flow force acting on the upper face 6 is neither such as to overcome the aforesaid lifting force, nor to open the valve 8. In this Figure 3, the floating body 9 is in abutment against an end stop 16 and is guided by axial projections 17.

With reference to Figure 4, the arrows F3 indicate a particularly abundant and anomalous flow of condensate entering the body valve 2. "Anomalous flow" means a flow such as to generate on the upper face 6 a downward force greater than the floating force acting on the lower face, with consequent lowering of the floating body 9, until it comes into contact with the upper edge of the inner portion 19 of the tubular element 15. Figure 4 shows that the check valve 8 is configured to open in these conditions and generate a draining channel along the axis A.
Lastly, it is clear that modifications and variations may be made to the valve of the present invention without departing from the scope of the appended claims.

## Claims

1. A draining valve for draining the condensate of a condensation boiler, the valve (1) extending along an axis (A) and comprising a body valve (2); a condensate feeding inlet (3) and a condensate draining outlet (4) on opposite sides of the body valve (2) along the axis (A); a floating shutter (5) housed inside the body valve (2) and comprising a first face (6) facing the feeding inlet (3) and a second face (7) facing the draining outlet (4); the floating shutter (5) being selectively movable relative to the body valve (2) along the axis (A) between:
- a first raised position in which the floating shutter (5) is raised by the floating force generated by the condensate against the second face (7) and opens a main draining channel; and
- a second lowered position in which the floating shutter (5) is lowered in abutment against the draining outlet (4) for closing the main draining channel;
**characterised in that**
the floating shutter (5) is also configured for selectively opening a secondary draining channel when in the second lowered position a force higher than a predetermined value acts on the first face (6).

2. The draining valve as claimed in claim 1, wherein the floating shutter (5) comprises a toroidal floating body (9) with a through cavity centered on the axis (A) of the valve (1) and a check valve (8) housed inside the through cavity, the check valve (8) being configured for selectively opening the secondary condensate draining channel along the axis (A) of the valve (1).

3. The draining valve as claimed in claim 2, wherein at least a seal (18) is provided between the check valve (8) and the through cavity of the toroidal floating body (9) .

4. The draining valve as claimed in claim 2 or 3, wherein the check valve (8) comprises a fixed portion (10) integral with the toroidal floating body (9) and a movable portion (11), which is movable relative to the fixed portion (10) along the axis (A) of the valve (1) and faces the feeding inlet (3); the movable portion (11) being movable between a raised position in which it closes the secondary draining channel and a lowered position in which it opens the secondary draining channel, a spring (12) being provided between the fixed portion (10) and the movable portion (11).

5. The draining valve as claimed in claim 4, wherein the movable portion (11) is in a lowered position with respect to the second face (7) of the floating shutter (5).

6. The draining valve as claimed in any one of the foregoing claims, wherein the body valve (2) comprises a first and a second cup-shaped body (13, 14), which comprise the feeding inlet (3) and the draining outlet (4) respectively.

7. The draining valve as claimed in any one of the foregoing claims, wherein the draining outlet (4) comprises a draining duct (15) provided with a portion (19) protruding inside the body valve (2).

8. The draining valve as claimed in any one of the foregoing claims, wherein the body valve (2) comprises a stop element (16) for stopping the raising of the floating shutter (5).

9. The draining valve as claimed in any one of the foregoing claims, wherein the draining valve (1) comprises guides (17) configured for guiding the motion of the floating shutter (5) and keeping the floating shutter (5) centered with respect to the axis (A) of the valve (1).

10. A condensation boiler (20) comprising:
- a combustion chamber (21) where heat is exchanged between hot smoke produced by combustion and water to be heated flowing between an inlet (23) and an outlet (24);
- a burner (25) configured for generating hot smoke from combustion of air (26) and fuel (27) inside the combustion chamber (21);
- a condensate discharge duct (28) connected to a lower portion (29) of the combustion chamber (21);
- a hot smoke discharge duct (30);
**characterised in that**
the condensation boiler (20) comprises a draining valve (1) as claimed in any one of the foregoing claims arranged along the condensate discharge duct (28) or between the combustion chamber (21) and the condensate discharge duct (28) .

## Patentansprüche

1. Ein Ablassventil zum Ablassen von Kondensat eines Kondensationskessels, wobei sich das Ventil (1) entlang einer Achse (A) erstreckt und aufweisend einen Ventilkörper (2); einen Kondensatzufuhreinlass (3) und einen Kondensatablassauslass (4) auf den gegenüberliegenden Seiten des Ventilkörpers (2) entlang der Achse (A); einen schwimmenden Verschluss (5), der in dem Ventilkörper (2) untergebracht ist und eine dem Kondensatzufuhreinlass (3) zugewandte erste Seitenfläche (6) und eine dem Ablassauslass (4) zugewandte zweite Seitenfläche (7) aufweist, wobei der schwimmende Verschluss (5) relativ zu dem Ventilkörper (2) entlang der Achse (A) selektiv zwischen:
- einer ersten angehobenen Position, in der der schwimmende Verschluss (5) durch die schwimmende Kraft, die von dem Kondensat auf die zweite Seitenfläche (7) ausgeübt wird, angehoben ist und einen Hauptablasskanal öffnet, und
- einer zweiten abgesenkten Position, in der der schwimmende Verschluss (5) an dem Ablassauslass (4) anliegend zum Verschließen des Hauptablasskanals abgesenkt ist,
bewegbar ist;
**dadurch gekennzeichnet, dass**
der schwimmende Verschluss (5) auch zum selektiven Öffnen eines zweiten Ablasskanals ausgebildet ist, wenn in der zweiten abgesenkten Position auf die erste Seitenfläche (6) eine Kraft ausgeübt wird, die größer als ein vorgegebener Wert ist.

2. Das Ablassventil wie im Anspruch 1 beansprucht, wobei der schwimmende Verschluss (5) einen ringförmigen Schwimmkörper (9) mit einem auf der Achse (A) des Ventils (1) zentrierten Durchlass und einem in dem Durchlass untergebrachten Rückschlagventil (8) aufweist, wobei das Rückschlagventil (8) zum selektiven Öffnen des zweiten Kondensatablasskanals entlang der Achse (A) des Ventils (1) ausgebildet ist.

3. Das Ablassventil wie im Anspruch 2 beansprucht, wobei wenigstens eine Dichtung (18) zwischen dem Rückschlagventil (8) und dem Durchlass des ringförmigen Schwimmkörpers (9) vorgesehen ist.

4. Das Ablassventil wie im Anspruch 2 oder 3 beansprucht, wobei das Rückschlagventil (8) ein feststehendes Teil (10), das mit dem ringförmigen Schwimmkörper (9) einstückig ist, und ein bewegliches Teil (11) aufweist, das relativ zu dem feststehenden Teil (10) entlang der Achse (A) des Ventils (1) bewegbar ist und dem Zufuhreinlass (3) zugewandt ist; wobei das bewegliche Teil (11) zwischen einer angehobenen Position, in der dieses den zweiten Ablasskanal verschließt und einer abgesenkten Position, in der dieses den zweiten Ablasskanal öffnet, bewegbar ist, wobei eine Feder (12) zwischen dem feststehenden Teil (10) und dem beweglichen Teil (11) vorgesehen ist.

5. Das Ablassventil wie im Anspruch 4 beansprucht, wobei sich das bewegliche Teil (11) in einer abgesenkten Position in Bezug auf die zweite Seitenfläche (7) des schwimmenden Verschlusses (5) befindet.

6. Das Ablassventil wie in irgendeinem der vorhergehenden Ansprüche beansprucht, wobei der Ventilkörper (2) einen ersten und einen zweiten becherförmigen Körper (13, 14) aufweist, welcher den Zufuhreinlass (3) bzw. den Ablassauslass (4) aufweist.

7. Das Ablassventil wie in irgendeinem der vorhergehenden Ansprüche beansprucht, wobei der Ablassauslass (4) ein Ablassrohr (15) aufweist, der mit einem sich in den Ventilkörper (2) erstreckenden Teil (19) versehen ist.

8. Das Ablassventil wie in irgendeinem der vorhergehenden Ansprüche beansprucht, wobei der Ventilkörper (2) ein Anschlagelement (16) zum Stoppen des Anhebens des schwimmenden Verschlusses (5) aufweist.

9. Das Ablassventil wie in irgendeinem der vorhergehenden Ansprüche beansprucht, wobei das Ablassventil (1) Führungen (17) aufweist, die zum Führen der Bewegung des schwimmenden Verschlusses (5) und Halten des schwimmenden Verschlusses (5) in Bezug auf die Achse (A) des Ventils (1) zentriert aufweist.

10. Ein Kondensationskessel (20) aufweisend:
- eine Verbrennungskammer (21), in der Wärme zwischen heißem Dampf, der bei der Verbrennung erzeugt wird und zu erwärmenden zwischen einem Einlass (23) und einem Auslass (24) strömenden Wasser ausgetauscht wird;
- einen Brenner (25), der zum Erzeugen von heißem Dampf aus der Verbrennung von Luft (26) und Brennstoff (27) in der Verbrennungskammer (21) ausgebildet ist;
- ein Kondensatabführrohr (28), das mit einem unteren Teil (29) der Verbrennungskammer (21) verbunden ist;
- ein Abführrohr für heißen Dampf (30);
**dadurch gekennzeichnet, dass**
der Kondensationskessel (20) ein Ablassventil (1) wie in irgendeinem der vorhergehenden Ansprüche beansprucht aufweist, welches entlang des Kondensatabführohrs (28) oder zwischen der Verbrennungskammer (21) und dem Kondensatabführrohr (28) angeordnet ist.

## Revendications

1. Vanne de drainage pour drainer le condensat d'une chaudière à condensation, la vanne (1) s'étendant le long d'un axe (A) et comprenant un corps de vanne (2) ; une entrée d'acheminement de condensat (3) et une sortie de drainage de condensat (4) sur des côtés opposés du corps de vanne (2) le long de l'axe (A); un obturateur flottant (5) logé à l'intérieur du corps de vanne (2) et comprenant une première face (6) faisant face à l'entrée d'acheminement (3) et une seconde face (7) faisant face à la sortie de drainage (4); l'obturateur flottant (5) étant sélectivement mobile par rapport au corps de vanne(2) le long de l'axe (A) entre :
- une première position élevée dans laquelle l'obturateur flottant (5) est élevé par la force de flottement générée par le condensat contre la seconde face (7) et ouvre un canal de drainage principal ; et
- une seconde position abaissée dans laquelle l'obturateur flottant (5) est abaissé en butée contre la sortie de drainage (4) pour fermer le canal de drainage principal ;
**caractérisée en ce que**
l'obturateur flottant (5) est également configuré pour ouvrir sélectivement un canal de drainage secondaire lorsque, dans la seconde position abaissée, une force plus élevée qu'une valeur prédéterminée agit sur la première face (6).

2. Vanne de drainage selon la revendication 1, dans laquelle l'obturateur flottant (5) comprend un corps flottant toroïdal (9) avec une cavité traversante centrée sur l'axe (A) de la vanne(1) et une vanne anti-retour (8) logée à l'intérieur de la cavité traversante, la vanne anti-retour (8) étant configurée pour ouvrir sélectivement le canal de drainage de condensat secondaire le long de l'axe (A) de la vanne (1).

3. Vanne de drainage selon la revendication 2, dans laquelle au moins un joint (18) est situé entre la vanne anti-retour (8) et la cavité traversante du corps flottant toroïdal (9).

4. Vanne de drainage selon la revendication 2 ou 3, dans laquelle la vanne anti-retour (8) comprend une partie fixe (10) solidaire du corps flottant toroïdal (9) et une partie mobile (11), qui est mobile par rapport à la partie fixe (10) le long de l'axe (A) de la vanne (1) et fait face à l'entrée d'acheminement (3); la partie mobile (11) étant mobile entre une position élevée dans laquelle elle ferme le canal de drainage secondaire et une position abaissée dans laquelle elle ouvre le canal de drainage secondaire, un ressort (12) étant situé entre la partie fixe (10) et la partie mobile (11).

5. Vanne de drainage selon la revendication 4, dans laquelle la partie mobile (11) est dans une position abaissée par rapport à la seconde face (7) de l'obturateur flottant (5).

6. Vanne de drainage selon l'une quelconque des revendications précédentes, dans laquelle le corps de vanne(2) comprend un premier et un second corps cupuliforme (13, 14), qui comprennent l'entrée d'acheminement (3) et la sortie de drainage (4) respectivement.

7. Vanne de drainage selon l'une quelconque des revendications précédentes, dans laquelle la sortie de drainage (4) comprend un conduit de drainage (15) pourvu d'une partie (19) faisant saillie à l'intérieur du corps de vanne (2).

8. Vanne de drainage selon l'une quelconque des revendications précédentes, dans laquelle le corps de vanne (2) comprend un élément d'arrêt (16) pour arrêter l'élévation de l'obturateur flottant (5).

9. Vanne de drainage selon l'une quelconque des revendications précédentes, dans laquelle la vanne de drainage (1) comprend des guides (17) configurés pour guider le mouvement de l'obturateur flottant (5) et maintenir l'obturateur flottant (5) centré par rapport à l'axe (A) de la vanne (1).

10. Chaudière à condensation (20) comprenant :
- une chambre de combustion (21) où de la chaleur est échangée entre de la fumée chaude produite par combustion et de l'eau à chauffer s'écoulant entre une entrée (23) et une sortie (24) ;
- un brûleur (25) configuré pour générer de la fumée chaude à partir de la combustion d'air (26) et de carburant (27) à l'intérieur de la chambre de combustion (21) ;
- un conduit de décharge de condensat (28) raccordé à une partie inférieure (29) de la chambre de combustion (21) ;
- un conduit de décharge de fumée chaude (30) ;
**caractérisée en ce que**
la chaudière à condensation (20) comprend une vanne de drainage (1) selon l'une quelconque des revendications précédentes agencé le long du conduit de décharge de condensat (28) ou entre la chambre de combustion (21) et le conduit de décharge de condensat (28).
